# EUROPEAN PATENT APPLICATION

(11) **EP 4 549 272 A1**
(43) Date of publication of application: **07.05.2025**
(21) Application number: 23745256.0
(22) Date of filing: 16.06.2023
(51) Int. Cl.: B60W 30/085, B60W 30/095, B60W 30/16, B60W 50/14, B60W 50/16, B60W 30/18

(54) **MOTORCYCLE CONTROL DEVICE AND CONTROL METHOD**

(30) Priority: 30.06.2022 JP 2022106011
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2023/056261
(87) International publication number: WO 2024/003667

(57) **Abstract**

The present disclosure obtains a controller and a control method capable of improving assistance performance for a rider of a motorcycle.

A controller for a motorcycle (100) includes an execution section (32) and a determination section (33). The execution section executes speed control operation to control a speed of the motorcycle on the basis of positional relationship information, which is information on a positional relationship between the motorcycle and another vehicle traveling around the motorcycle. The determination section determines presence or absence of necessity to stop the motorcycle or make the motorcycle become a crawl during travel of the motorcycle. During execution of the speed control operation, in the case where the determination section determines the presence of the necessity, the execution section executes first automatic control operation to automatically stop the motorcycle or to automatically make the motorcycle become the crawl. At least at one time point during the execution of the first automatic control operation, the execution section decelerates the motorcycle regardless of the positional relationship between the motorcycle and the other vehicle.

## Description

### Technical Field

The present disclosure relates to a controller and a control method for a motorcycle.

### Background Art

Conventionally, various techniques for assisting with driving by a rider of a motorcycle have been proposed. For example, a controller that automatically decelerates the motorcycle is disclosed in WO2018/185578A1.

### Citation List

### Patent Literature

PTL 1: WO2018/185578A1

### Summary of Invention

### Technical Problem

A posture of the motorcycle is more likely to become unstable than a posture of an automobile having four wheels. For example, the motorcycle cannot stand upright alone in a stopped state, and is likely to fall over when a speed of the motorcycle becomes low. Thus, when the motorcycle is automatically decelerated, the posture of the motorcycle possibly becomes unstable, which compromises safety.

The present disclosure has been made with the above-described problem as the background and therefore obtains a controller and a control method capable of improving assistance performance for a rider of a motorcycle.

### Solution to Problem

According to an embodiment of the present disclosure, a controller for a motorcycle includes an execution section and a determination section. The execution section executes speed control operation to control a speed of the motorcycle on the basis of positional relationship information, which is information on a positional relationship between the motorcycle and another vehicle traveling around the motorcycle. The determination section determines presence or absence of necessity to stop the motorcycle or make the motorcycle become a crawl during travel of the motorcycle. During execution of the speed control operation, in the case where the determination section determines the presence of the necessity, the execution section executes first automatic control operation to automatically stop the motorcycle or to automatically make the motorcycle become the crawl. At least at one time point during the execution of the first automatic control operation, the execution section decelerates the motorcycle regardless of the positional relationship between the motorcycle and the other vehicle.

According to an aspect of the present disclosure, a control method for a motorcycle includes: executing speed control operation by an execution section of a controller to control a speed of the motorcycle on the basis of positional relationship information, which is information on a positional relationship between the motorcycle and another vehicle traveling around the motorcycle; and determining presence or absence of necessity to stop the motorcycle or make the motorcycle become a crawl during travel of the motorcycle by a determination section of the controller. During execution of the speed control operation, the execution section executes first automatic control operation to automatically stop the motorcycle or to automatically make the motorcycle become the crawl in the case where the determination section determines the presence of the necessity, and decelerates the motorcycle regardless of the positional relationship between the motorcycle and the other vehicle at least at one time point during execution of the first automatic control operation.

### Advantageous Effects of Invention

According to the present disclosure, the determination section determines the presence or the absence of the necessity to stop the motorcycle or make the motorcycle become the crawl during the travel of the motorcycle. During the execution of the speed control operation, in the case where the determination section determines the presence of the necessity, the execution section executes the first automatic control operation to automatically stop the motorcycle or to automatically make the motorcycle become the crawl. At least at one time point during the execution of the first automatic control operation, the execution section decelerates the motorcycle regardless of the positional relationship between the motorcycle and the other vehicle. As a result, the deceleration generated to the motorcycle can appropriately be controlled during the execution of the first automatic control operation, and assistance performance for the rider of the motorcycle is improved.

### Brief Description of Drawings

Fig. 1 is a view illustrating a mounted state of a rider-assistance system according to an embodiment of the present disclosure to a motorcycle.
Fig. 2 is a diagram illustrating a schematic configuration of a controller in the rider-assistance system according to the embodiment of the present disclosure.
Fig. 3 is a flowchart illustrating a control flow according to the embodiment of the present disclosure.
Fig. 4 is a flowchart illustrating a control flow according to the embodiment of the present disclosure. Description of Embodiments

A description will hereinafter be made on a controller and a control method according to the present disclosure with reference to the drawings.

A configuration, operation, and the like, which will be described below, merely constitute one example, and the controller and the control method according to the present disclosure are not limited to a case with such a configuration, such operation, and the like.

The same or similar description will appropriately be simplified or will not be made below. In the drawings, the same or similar portions will be denoted by the same reference sign or will not be denoted by a reference sign. A detailed structure will appropriately be illustrated in a simplified manner or will not be illustrated.

A description will hereinafter be made on a case where the controller and the control method according to the present disclosure are applied to a two-wheeled motorcycle. However, the controller and the control method according to the present disclosure may be applied to a lean vehicle other than a two-wheeled motorcycle. The lean vehicle means a vehicle in general that travels in a state of leaning to a turning direction during a turn. Examples of the lean vehicle are the two-wheeled motorcycle and a three-wheeled motorcycle. The motorcycles include a vehicle that has an engine as a propelling source, a vehicle that has an electric motor as the propelling source, and the like. Examples of the motorcycle are a bike, a scooter, and an electric scooter.

A description will hereinafter be made on a rider-assistance system according to an embodiment.

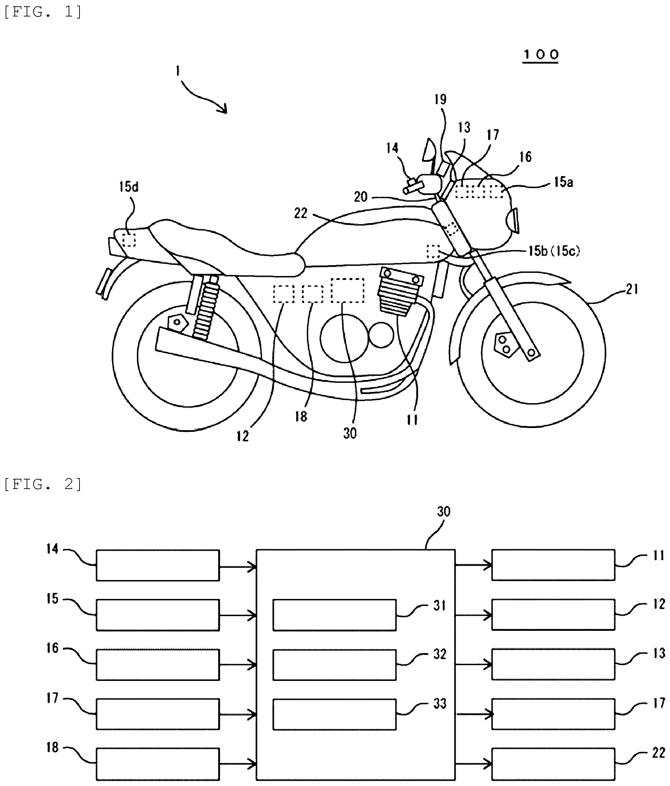

Fig. 1 is a view illustrating a mounted state of a rider-assistance system according to the embodiment of the present disclosure to a motorcycle.

As illustrated in Fig. 1, a rider-assistance system 1 is mounted to a motorcycle 100. For example, the rider-assistance system 1 includes a drive system 11, a brake system 12, a display device 13, an input device 14, a surrounding environment sensor 15, a communication device 16, a positioning sensor 17, a vehicle behavior sensor 18, a notification device 19, a steering system 20, a front wheel 21, a steering motor 22, and a controller 30.

The drive system 11 is a drive source that drives a wheel of the motorcycle 100. In the present disclosure, a description will be made on an example in which an engine as the drive system 11 is mounted to the motorcycle 100. However, the drive system (for example, an electric motor) other than the engine may be mounted as the drive system 11, or the plural drive sources may be mounted.

The brake system 12 controls a braking force generated on the wheel. The brake system 12 may control the braking force that is generated on each of the front wheel 21 and a rear wheel, or may only control the braking force that is generated on one of the front wheel 21 and the rear wheel. For example, the brake system 12 is a hydraulic pressure control unit. The hydraulic pressure control unit is provided on an oil channel that connects a master cylinder to a wheel cylinder. The hydraulic pressure control unit includes components (for example, a control valve and a pump) for controlling a brake hydraulic pressure in the wheel cylinder. By controlling operation of the components of the hydraulic pressure control unit, the braking force generated on the wheel is controlled.

The display device 13 has a display function to display information visually. Examples of the display device 13 are a liquid-crystal display and a lamp.

The input device 14 accepts various operations by a rider of the motorcycle 100. Information on the rider's operation using the input device 14 is output to the controller 30. The input device 14 may be provided to the motorcycle 100 or may be provided to an accessory (for example, a helmet, a glove, or the like) that is associated with the motorcycle 100. For example, the input device 14 is provided to a handlebar of the motorcycle 100, and includes a push button or the like used for the rider's operation. Alternatively, the input device 14 may be included in the display device 13. In this case, for example, the rider uses the display device 13 to perform the various operations according to the information that is displayed on the display device 13. The input device 14 may accept an operation by the rider's body (for example, a hand, a foot, or the like) or may accept voice produced by the rider. For example, the rider can switch to enable or disable any of various types of rider-assistance operation by using the input device 14. In addition, for example, the rider can use the input device 14 to set various modes or various threshold values (for example, an upper limit value, a lower limit value, and the like) that are used in the various types of the rider-assistance operation.

The surrounding environment sensor 15 detects surrounding environment information that is related to environment around the motorcycle 100. The surrounding environment sensor 15 is mounted to the motorcycle 100. For example, the surrounding environment sensor 15 may be a surrounding environment sensor 15a that is provided to a front portion of a trunk of the motorcycle 100 to acquire environmental information in front of the motorcycle 100. For example, the surrounding environment sensor 15 may be a surrounding environment sensor 15b that is provided to a right portion of the trunk of the motorcycle 100 to acquire the environmental information on a right side of the motorcycle 100. For example, the surrounding environment sensor 15 may be a surrounding environment sensor 15c that is provided to a left portion of the trunk of the motorcycle 100 to acquire the environmental information on a left side of the motorcycle 100. For example, the surrounding environment sensor 15 may be a surrounding environment sensor 15d that is provided to a rear portion of the trunk of the motorcycle 100 to acquire the environmental information behind the motorcycle 100. The surrounding environment sensor 15 may be a combination of any of the surrounding environment sensor 15a, the surrounding environment sensor 15b, the surrounding environment sensor 15c, and the surrounding environment sensor 15d. At least one of the surrounding environment sensor 15b and the surrounding environment sensor 15c may be substituted by the surrounding environment sensor 15a or the surrounding environment sensor 15d.

Each of the surrounding environment sensors 15a, 15b, 15c, 15d may detect information on a distance and/or an orientation to an object that is positioned within a detection range in a non-contact manner. Examples of the object that is positioned within the detection range are a vehicle, an obstacle, a road facility, a person, and an animal. Examples of the surrounding environment information are information on a relative position, a relative distance, a relative speed, relative acceleration, relative jerk, a passing time difference, and a predicted time until a collision. Each of the surrounding environment sensors 15a, 15b, 15c, 15d may detect a characteristic of the object that is positioned within the detection range in the non-contact manner. Examples of the characteristics of the object are a type, a shape, a size, and a mark on the object.

Examples of each of the surrounding environment sensors 15a, 15b, 15c, 15d are a radar, a Lidar sensor, an ultrasonic sensor, and a camera.

The communication device 16 wirelessly communicates with another communication device that is provided to a vehicle around the motorcycle 100 and/or with another communication device that is provided to the road facility (for example, a traffic light, a traffic sign, a guardrail, a utility pole, or the like). For example, the other communication device provided to the surrounding vehicle transmits, to the communication device 16, travel state information of the surrounding vehicle detected by the surrounding vehicle, surrounding environment information of the surrounding vehicle detected by the surrounding vehicle, and the like. For example, the other communication device provided to the road facility transmits, to the communication device 16, state information of the road facility, surrounding environment information of the road facility detected by the road facility, and the like.

The positioning sensor 17 receives positioning signals that are transmitted from plural communications satellites to identify a position of the motorcycle 100 on a global positioning system. The position of the motorcycle 100 is matched against map information to acquire positional information on a map.

Examples of the vehicle behavior sensor 18 are a vehicle speed sensor and an inertial measurement unit (IMU). The vehicle speed sensor detects a speed generated to the motorcycle 100. The vehicle speed sensor may detect another physical quantity that can substantially be converted to the speed generated to the motorcycle 100. The IMU detects acceleration in three axes (a front-rear direction, a vehicle width direction, and a vehicle height direction) and angular velocities in three axes (roll, pitch, and yaw) generated to the motorcycle 100. The IMU may detect other physical quantities that can substantially be converted to the three-axis acceleration and the three-axis angular velocities generated to the motorcycle 100. Alternatively, the IMU may partially detect the three-axis acceleration and the three-axis angular velocities.

The notification device 19 notifies the rider by various methods. For example, the notification device 19 notifies the rider by sensation (for example, display) through the rider's visual organ as a sensory organ. For example, the notification device 19 notifies the rider by the sensation (for example, sound) through the rider's auditory organ as the sensory organ. For example, the notification device 19 notifies the rider by the sensation (for example, vibration) through the rider's tactile organ as the sensory organ. Examples of the notification device 19 is a display, a lamp, a speaker, and a vibrator. The notification device 19 may be provided to the motorcycle 100 or may be provided to the accessory (for example, the helmet, the glove, or the like) that is associated with the motorcycle 100. The display device 13 may function as the notification device 19.

The steering system 20 includes the handlebar and is held by the trunk of the motorcycle 100 in a freely turnable manner. The front wheel 21 is held by the trunk of the motorcycle 100 in a freely turnable manner with the steering system 20. When the steering system 20 turns, a steering angle of the front wheel 21 (that is, an angle of the front wheel 21 with respect to the trunk) is changed. By turning the steering system 20, the rider can change the steering angle of the front wheel 21 to change an advancing direction of the motorcycle 100. For example, the steering system 20 is controlled when the controller 30 controls operation of the steering motor 22.

Fig. 2 is a diagram illustrating a schematic configuration of the controller 30 in the rider-assistance system 1 according to the embodiment of the present disclosure.

As illustrated in Fig. 2, the controller 30 includes an acquisition section 31, an execution section 32, and a determination section 33. The sections of the controller 30 may collectively be provided in a single casing or may separately be provided in plural casings. The controller 30 may partially or entirely be a microcomputer, a microprocessor unit, or the like, or may partially or entirely be one whose firmware or the like can be updated. Alternatively, the controller 30 may partially or entirely be a program module or the like that is executed by a command from a CPU or the like.

During travel or a stop of the motorcycle 100, the acquisition section 31 acquires the surrounding environment information, which is the information on the environment around the motorcycle 100, on the basis of output of the surrounding environment sensor 15. The surrounding environment information includes positional relationship information that is information related to a positional relationship between the motorcycle 100 and a target (for example, the vehicle, the obstacle, the road facility, the person, the animal, or the like) positioned around the motorcycle 100. Examples of the positional relationship information are the information on the relative position, the relative distance, the relative speed, the relative acceleration, the relative jerk, the passing time difference, and the predicted time until the collision. The positional relationship information may be information on another physical quantity that can substantially be converted to one of those. During the travel of the motorcycle 100, the acquisition section 31 may acquire the surrounding environment information of the motorcycle 100 on the basis of output of the communication device 16.

The execution section 32 executes various types of control operation for the motorcycle 100. For example, as the control operation, the execution section 32 executes speed control operation to control a speed of the motorcycle 100 on the basis of the positional relationship information, which is information on a positional relationship between the motorcycle 100 and another vehicle traveling around the motorcycle 100. For example, the positional relationship information is acquired by at least one of the surrounding environment sensor 15 and the communication device 16. The execution section 32 may automatically execute the speed control operation on the basis of the information acquired by the acquisition section 31, or may execute the speed control operation in response to the rider's input operation using the input device 14.

During execution of the speed control operation, the execution section 32 outputs a control signal to the drive system 11 or the brake system 12. The drive system 11 or the brake system 12 is controlled in order to generate or increase deceleration or acceleration to the motorcycle 100.

For example, in the speed control operation, the execution section 32 monitors a value of a travel speed of the motorcycle 100 that is acquired on the basis of a rotational frequency of the front wheel 21 and a rotational frequency of the rear wheel. In this way, the execution section 32 can control the travel speed of the motorcycle 100 to such a speed that does not exceed a preset upper-limit speed.

During the execution of the speed control operation, the execution section 32 executes first automatic control operation to automatically stop the motorcycle 100 or to automatically make the motorcycle 100 become a crawl. Details of the first automatic control operation will be described below.

In addition, during the execution of the speed control operation, the execution section 32 executes second automatic control operation to adjust the positional relationship between the motorcycle 100 and the other vehicle. Details of the second automatic control operation will be described below.

As will be described below the execution section 32 is configured to be able to switch between the first automatic control operation and the second automatic control operation during the execution of the speed control operation.

For example, the second automatic control operation is automatic speed following operation that causes the motorcycle 100 to automatically follow a speed of a target vehicle without relying on an accelerating/decelerating operation by the rider of the motorcycle 100. More specifically, the second automatic control operation includes adaptive cruise control (ACC).

In the second automatic control operation, the execution section 32 executes inter-vehicular distance maintenance control to maintain a distance between the motorcycle 100 and the target vehicle to a target value. In the inter-vehicular distance maintenance control, the execution section 32 controls the speed of the motorcycle 100 in a manner to maintain the distance between the motorcycle 100 and the target vehicle to a target distance. The distance between the motorcycle 100 and the target vehicle is not limited to a linear distance between the motorcycle 100 and the target vehicle in the front-rear direction of the motorcycle 100. For example, the distance between the motorcycle 100 and the target vehicle may mean a distance in a direction along a lane. In other words, the direction along the lane is also said as a direction along a travel lane of the motorcycle 100. Alternatively, the distance between the motorcycle 100 and the target vehicle may be a distance between the motorcycle 100 and the target vehicle in a diagonal direction that intersects with both of the front-rear direction and a right-left direction of the motorcycle 100.

In the second automatic control operation, the execution section 32 may execute passing time difference control to maintain a passing time difference between the motorcycle 100 and the target vehicle to a target value. In the passing time difference control, the execution section 32 changes the passing time difference between the motorcycle 100 and the target vehicle and thereby controls the positional relationship between the motorcycle 100 and the target vehicle in the front-rear direction.

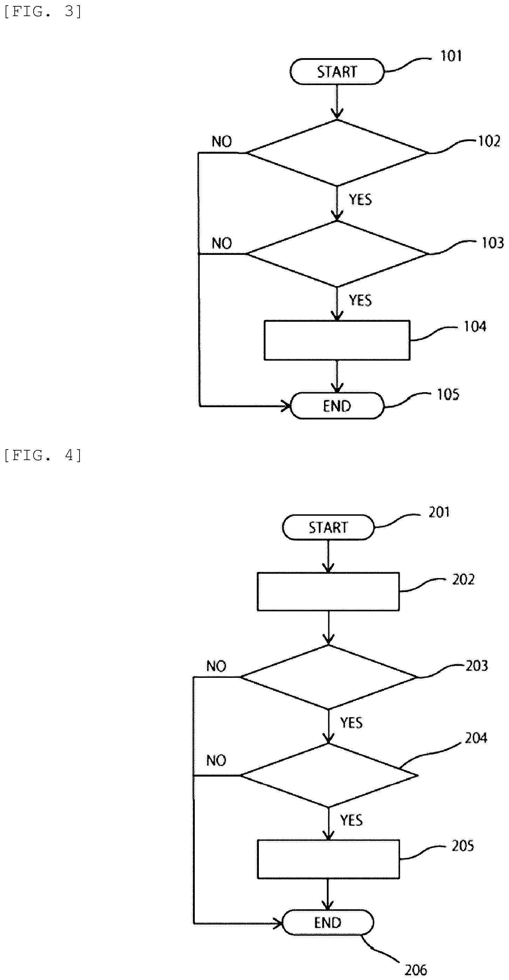

A further specific description will be made on the rider-assistance system 1 according to the embodiment of the present disclosure with reference to Fig. 3.

Fig. 3 is a flowchart illustrating a control flow that is executed by the controller 30. The control flow illustrated in Fig. 3 is executed during the execution of the speed control operation.

S101 corresponds to initiation of the control flow.

In S102, the determination section 33 determines presence or absence of necessity to stop the motorcycle 100 or make the motorcycle 100 become the crawl during the travel of the motorcycle 100.

For example, the determination section 33 determines the presence or the absence of the necessity on the basis of the output of the surrounding environment sensor 15 that is mounted to the motorcycle 100. For example, in the case where the output of the surrounding environment sensor 15 corresponds to information indicating that a vehicle is decelerated or stopped in front of the motorcycle 100, the determination section 33 determines the presence of the necessity to stop the motorcycle 100 or make the motorcycle 100 become the crawl. For example, in the case where the output of the surrounding environment sensor 15 corresponds to information indicating that a traffic signal in front of the motorcycle 100 urges the stop, the determination section 33 determines the presence of the necessity to stop the motorcycle 100 or make the motorcycle 100 become the crawl. For example, in the case where the output of the surrounding environment sensor 15 corresponds to information indicating that a traffic sign in front of the motorcycle 100 urges the stop, the determination section 33 determines the presence of the necessity to stop the motorcycle 100 or make the motorcycle 100 become the crawl. The output of the surrounding environment sensor 15 may be acquired by the determination section 33 via the acquisition section 31 or may directly be acquired by the determination section 33 from the surrounding environment sensor 15.

For example, the determination section 33 may determine the presence or the absence of the necessity on the basis of the output of the communication device 16 that wirelessly communicates with the surrounding vehicle and/or the road facility positioned around the motorcycle 100. For example, in the case where the output of the communication device 16 corresponds to the information indicating that the vehicle is decelerated or stopped in front of the motorcycle 100, the determination section 33 determines the presence of the necessity to stop the motorcycle 100 or make the motorcycle 100 become the crawl. For example, in the case where the output of the communication device 16 corresponds to the information indicating that the traffic signal in front of the motorcycle 100 urges the stop, the determination section 33 determines the presence of the necessity to stop the motorcycle 100 or make the motorcycle 100 become the crawl. For example, in the case where the output of the communication device 16 corresponds to the information indicating that the traffic sign in front of the motorcycle 100 urges the stop, the determination section 33 determines the presence of the necessity to stop the motorcycle 100 or make the motorcycle 100 become the crawl. The output of the communication device 16 may be acquired by the determination section 33 via the acquisition section 31 or may directly be acquired by the determination section 33 from the communication device 16.

In addition to the above-described examples, in the case where the output of the communication device 16 corresponds to information indicating that there is a traffic jam or a traffic accident in front of the motorcycle 100, the determination section 33 can also determine the presence of the necessity to stop the motorcycle 100 or make the motorcycle 100 become the crawl. Furthermore, the determination section 33 can also determine a distance to a point at which the motorcycle 100 has to be stopped or a distance from a current position of the motorcycle 100 to such a point on the basis of the output of the communication device 16**.**

The determination section 33 may determine the presence or the absence of the necessity on the basis of output of the positioning sensor 17 that is mounted to the motorcycle 100. In this case, furthermore, the determination section 33 can also determine the distance to the point at which the motorcycle 100 has to be stopped or the distance from the current position of the motorcycle 100 to such a point on the basis of the output of the positioning sensor 17.

The determination section 33 may determine the presence or the absence of the necessity on the basis of output of the vehicle behavior sensor 18 that is mounted to the motorcycle 100 or may determine the presence or the absence of the necessity on the basis of the map information.

If the determination section 33 determines the presence of the necessity in S102 (S102: YES), the control flow proceeds to S103. If the determination section 33 determines the absence of the necessity in S102 (S102: YES), the control flow proceeds to S105 and is terminated.

In S103, the determination section 33 determines whether a travel state of the motorcycle 100 meets a predetermined criterion. In the case where the speed of the motorcycle 100 is equal to or lower than a speed threshold value, and/or in the case where the acceleration of the motorcycle 100 is equal to or lower than an acceleration threshold value, the determination section 33 determines that the travel state of the motorcycle 100 meets the predetermined criterion.

If the determination section 33 determines in S103 that the travel state of the motorcycle 100 meets the predetermined criterion (S103: YES), the control flow proceeds to S104. If the determination section 33 determines in S103 that the travel state of the motorcycle 100 does not meet the predetermined criterion (S103: NO), the control flow proceeds to S105 and is terminated.

If the travel state of the motorcycle 100 meets the predetermined criterion (S103: YES), in S104, the execution section 32 executes the first automatic control operation to automatically stop the motorcycle 100 or to automatically make the motorcycle 100 become the crawl. At least at one time point during execution of the first automatic control operation, the execution section 32 decelerates the motorcycle 100 regardless of the positional relationship between the motorcycle 100 and the other vehicle traveling around the motorcycle 100.

After the first automatic control operation is executed in S104, the control flow proceeds to S105 and is terminated.

During the execution of the first automatic control operation, the execution section 32 decelerates the motorcycle 100 at predetermined deceleration until the motorcycle 100 is stopped. The predetermined deceleration is a fixed value. For example, during the execution of the first automatic control operation, the execution section 32 decelerates the motorcycle 100 while maintaining the same deceleration between a case where the positional relationship between the motorcycle 100 and the other vehicle traveling around the motorcycle 100 shows a separating tendency and a case where the positional relationship between the motorcycle 100 and the other vehicle traveling around the motorcycle 100 shows an approaching tendency.

During the execution of the first automatic control operation, the execution section 32 sets a predetermined speed profile and decelerates the motorcycle 100 until the motorcycle 100 is stopped or becomes the crawl. For example, the execution section 32 controls the various devices of the motorcycle 100 either mechanically or electrically and thereby decelerates the motorcycle 100 by increasing or reducing the deceleration thereof in a stepwise manner. More specifically, for example, the execution section 32 increases or reduces the deceleration of the motorcycle 100 by controlling the drive system 11 or the brake system 12.

Here, there is a case where the first automatic control operation is executed since the travel state of the motorcycle 100 meets the predetermined criterion due to a fact that a preceding vehicle positioned in front of the motorcycle 100 is decelerated or stopped. In this case, the preceding vehicle may accelerate or start traveling again after the speed of the motorcycle 100 becomes low. According to the present disclosure, even in the case where the preceding vehicle is accelerated or starts traveling, the execution section 32 does not cancel the first automatic control operation and keeps decelerating the motorcycle 100 to stop the motorcycle 100 or to make the motorcycle 100 become the crawl. In other words, according to the control flow illustrated in Fig. 3, the motorcycle 100 is decelerated regardless of the positional relationship between the motorcycle 100 and the preceding vehicle.

A description will hereinafter be made on an example in which, during the execution of the speed control operation, the execution section 32 executes the second automatic control operation to adjust the positional relationship between the motorcycle 100 and the other vehicle with reference to Fig. 4. The control flow illustrated in Fig. 4 is executed during the execution of the speed control operation. In the following description, portions that overlap the flowchart illustrated in Fig. 3 will not be described.

S201 corresponds to initiation of the control flow.

In S202, during the execution of the speed control operation, the execution section 32 executes the second automatic control operation to adjust the positional relationship between the motorcycle 100 and the other vehicle. A description will hereinafter be made on an example in which the other vehicle in the second automatic control operation is a target vehicle to be followed, a speed of which is automatically followed by the motorcycle 100. The execution section 32 may automatically execute the second automatic control operation on the basis of the information acquired by the acquisition section 31 or may execute the second automatic control operation in response to the rider's input operation using the input device 14.

After the second automatic control operation is executed in S202, the control flow proceeds to S203.

In S203, the determination section 33 determines the presence or the absence of the necessity to stop the motorcycle 100 or make the motorcycle 100 become the crawl during execution of the second automatic control operation. For example, in the case where the target vehicle to be followed is decelerated or stopped during the execution of the second automatic control operation, the determination section 33 determines the presence of the necessity.

If the determination section 33 determines the presence of the necessity in S203 (S203: YES), the control flow proceeds to S204. If the determination section 33 determines the absence of the necessity in S203 (S203: YES), the control flow proceeds to S206 and is terminated.

In S204, the determination section 33 determines whether a supplementary condition is met.

The supplementary condition includes a first condition, a second condition, and a third condition. In the case where the first condition, the second condition, and the third condition are met, the determination section 33 determines that the supplementary condition is met.

The first condition is a condition that the travel state of the motorcycle 100 meets the criterion. More specifically, in the case where the speed of the motorcycle 100 is equal to or lower than the speed threshold value, the determination section 33 determines that the first condition is met.

The second condition is a condition that a travel state of the target vehicle to be followed meets a criterion. More specifically, in the case where the target vehicle to be followed is accelerated or starts traveling again after being decelerated or stopped, the determination section 33 determines that the second condition is met.

The third condition is a condition that positional relationship information between the motorcycle 100 and the target vehicle to be followed meets a criterion. More specifically, in the case where at least one of a relative speed of the target vehicle to be followed to the motorcycle 100, a distance between the motorcycle 100 and the target vehicle to be followed, acceleration of the target vehicle to be followed, and target acceleration generated to the motorcycle 100 in the second automatic control operation falls below a predetermined threshold value, the determination section 33 determines that the third condition is met.

If the determination section 33 determines in S204 that the motorcycle 100 meets the supplementary condition (S204: YES), the control flow proceeds to S205. If the determination section 33 determines in S204 that the motorcycle 100 does not meet the supplementary condition (S204: NO), the control flow proceeds to S206 and is terminated.

If the motorcycle 100 meets the supplementary condition (S204: YES), in S205, the execution section 32 switches from the second automatic control operation to the first automatic control operation. In this way, even in the case where the target vehicle to be followed is accelerated or starts traveling again after being decelerated or stopped, the execution section 32 cancels the second automatic control operation when the supplementary condition is met. Then, the execution section 32 executes the first automatic control operation to stop the motorcycle 100 or to make the motorcycle 100 become the crawl.

After the second automatic control operation is switched to the first automatic control operation in S205, the control flow proceeds to S206 and is terminated.

Here, in the case where the determination section 33 determines in S204 that the motorcycle 100 does not meet the supplementary condition, the execution section 32 continues the second automatic control operation. In this way, the execution section 32 causes the motorcycle 100 to follow the speed of the target vehicle to be followed without stopping the motorcycle 100 or making the motorcycle 100 become the crawl.

In the control flows illustrated in Fig. 3 and Fig. 4, the execution section 32 may execute various types of supplementary assistance operation during the execution of the first automatic control operation. A description will hereinafter be made on the supplementary assistance operation. The various types of the supplementary assistance operation, which will be described below, are not limited to an example in which each thereof is executed independently. The various types of the supplementary assistance operation can be combined appropriately for execution.

When the motorcycle 100 is decelerated, and the speed thereof becomes low, stability of a posture of the motorcycle 100 is reduced. For this reason, the execution section 32 may execute, as the supplementary assistance operation, posture stabilization operation to stabilize the posture of the motorcycle 100.

For example, as the posture stabilization operation, the execution section 32 may increase drive power (for example, engine torque) of the drive system 11 while setting the predetermined speed profile to decelerate the motorcycle 100 in the stepwise manner. As the posture stabilization operation, the execution section 32 may generate the braking force on the rear wheel while setting the predetermined speed profile to decelerate the motorcycle 100 in the stepwise manner. As the posture stabilization operation, the execution section 32 may increase the drive power (for example, the engine torque) of the drive system 11 and generate the braking force on the rear wheel while setting the predetermined speed profile to decelerate the motorcycle 100 in the stepwise manner. As the posture stabilization operation, the execution section 32 may generate the drive power (for example, the engine torque) of the drive system 11 or generate the braking force on the rear wheel while setting the predetermined speed profile to decelerate the motorcycle 100 in the stepwise manner.

For example, as the posture stabilization operation, the execution section 32 may execute steering control to control movement of the steering system 20 of the motorcycle 100. For example, as the posture stabilization operation, the execution section 32 may execute pitch control to suppress pitch operation of the motorcycle 100. The execution section 32 executes one or both of the steering control and the pitch control on the basis of the output of the vehicle behavior sensor 18.

As the supplementary assistance operation, the execution section 32 may use the notification device 19 to notify the rider of the initiation of the first automatic control operation.

The determination section 33 may determine presence or absence of a collision possibility that is a possibility of a collision between the motorcycle 100 and a target object around the motorcycle 100. More specifically, in the case where the collision possibility meets a criterion, the determination section 33 determines the presence of the collision possibility. Further more specifically, in the case where an index value indicating the collision possibility exceeds a first threshold value, the determination section 33 determines the presence of the collision possibility. An example of the index value indicating the collision possibility is a relative speed of the motorcycle 100 to the surrounding target object.

In the case where the determination section 33 determines the presence of the collision possibility, the execution section 32 executes the notification operation as the supplementary assistance operation.

The notification operation is notification operation to notify the rider of the motorcycle 100 and/or notification operation to notify a target communication object that is wirelessly communicable with the motorcycle 100.

In the notification operation, the execution section 32 notifies of the presence of the collision possibility. The notification operation to notify the rider of the motorcycle 100 may be executed by using the notification device 19 of the motorcycle 100. The notification operation for the target communication object may be executed by using a notification device on the outside of the motorcycle 100, such as a notification device provided to the other vehicle traveling around the motorcycle 100 or a smartphone of a pedestrian.

For example, the notification operation for the target communication object is operation to notify a traveling vehicle that travels around the motorcycle 100 via vehicle-to-vehicle communication (V2V). For example, the notification operation for the target communication object is operation to notify of the surrounding road facility via a vehicle communication system (V2X). For example, the notification operation for the target communication object is operation to notify the pedestrian around the motorcycle 100. For example, the notification operation for the target communication object is operation to notify the target vehicle to be followed in the second automatic control operation.

In the case where the index value indicating the collision possibility exceeds a second threshold value, the determination section 33 may determine that the collision cannot be avoided.

In the case where the determination section 33 determines that the collision cannot be avoided, the execution section 32 may actuate a safety device (for example, an airbag) as the supplementary assistance operation. In the case where the determination section 33 determines that the collision cannot be avoided, the execution section 32 may execute emergency notification operation as the supplementary assistance operation. For example, as the emergency notification operation, the execution section 32 can make an emergency phone call to the outside of the motorcycle 100 (for example, a hospital, an ambulance, or the like).

The determination section 33 may determine whether the motorcycle 100 is traveling on a curve on the basis of the information such as the output of the surrounding environment sensor 15, the output of the communication device 16, the output of the positioning sensor 17, the output of the vehicle behavior sensor 18, or the map information acquired by the acquisition section 31. In the case where the motorcycle 100 is traveling on the curve, the execution section 32 may execute the above-described posture stabilization operation. Alternatively, for example, in the case where the determination section 33 determines that the motorcycle 100 is traveling on the curve, the execution section 32 may stop the first automatic control operation and execute the posture stabilization operation. Further alternatively, in the case where the determination section 33 determines that the motorcycle 100 is traveling on the curve, the execution section 32 may execute the first automatic control operation by setting the deceleration or the speed profile that does not hinder the posture stabilization operation.

There is a case where, when the motorcycle 100 is traveling on the curve, it is difficult to decelerate the motorcycle 100 due to the unstable posture of the motorcycle 100, for example. There is also a case where, when the motorcycle 100 cannot be decelerated, it is difficult to stop the motorcycle 100 before colliding with the surrounding target object or to control behavior of the motorcycle 100 in a manner to avoid the collision. For this reason, for example, in the case where a roll angle or a yaw rate of the motorcycle 100 exceeds a threshold value, and the determination section 33 determines that it is difficult to secure a sufficient braking distance to avoid the collision with the surrounding target object, the execution section 32 may prioritize the execution of the above-described supplementary assistance operation over the execution of the first automatic control operation.

A description will hereinafter be made on effects obtained by the present disclosure.

According to the present disclosure, the determination section 33 determines the presence or the absence of the necessity to stop the motorcycle 100 or make the motorcycle 100 become the crawl during the travel of the motorcycle 100. During the execution of the speed control operation, in the case where the determination section 33 determines the presence of the necessity, the execution section 32 executes the first automatic control operation to automatically stop the motorcycle 100 or to automatically make the motorcycle 100 become the crawl. At least at the one time point during the execution of the first automatic control operation, the execution section 32 decelerates the motorcycle 100 regardless of the positional relationship between the motorcycle 100 and the other vehicle. As a result, the deceleration generated to the motorcycle 100 can appropriately be controlled during the execution of the first automatic control operation, and assistance performance for the rider of the motorcycle 100 is improved.

According to the present disclosure, during the execution of the second automatic control operation, in the case where the determination section 33 determines the presence of the necessity to stop the motorcycle 100 or make the motorcycle 100 become the crawl during the travel of the motorcycle 100, and the supplementary condition is met, the execution section 32 switches from the second automatic control operation to the first automatic control operation. As a result, even during the execution of the second automatic control operation, the motorcycle 100 can be decelerated when necessary regardless of the positional relationship between the motorcycle 100 and the other vehicle. Meanwhile, in the case where the necessity to stop the motorcycle 100 or make the motorcycle 100 become the crawl is absent, the second automatic control operation can be continued. In other words, the motorcycle 100 can appropriately be controlled according to various situations.

According to the present disclosure, during the execution of the first automatic control operation, the execution section 32 executes any of the various types of the supplementary assistance operation including the posture stabilization operation, the notification operation, the actuation of the safety device, and the like. The supplementary assistance operation includes the posture stabilization operation to stabilize the posture of the motorcycle 100 during the execution of the first automatic control operation. The posture stabilization operation includes: the steering control for controlling the movement of the steering system 20 of the motorcycle 100; and the pitch control for suppressing the pitch operation of the motorcycle 100. By executing the supplementary assistance operation, it is possible to improve safety of the motorcycle 100 during the first automatic control operation.

According to the present disclosure, for example, the posture stabilization operation is executed in the case where the motorcycle 100 is traveling on the curve. The behavior of the motorcycle 100 that is traveling on the curve is more likely to be unstable than a four-wheeled motor vehicle. By executing the posture stabilization operation while the motorcycle 100 is traveling on the curve, it is possible to improve the safety of the motorcycle 100.

According to the present disclosure, the determination section 33 determines the presence or the absence of the collision possibility that is the possibility of the collision between the motorcycle 100 and the target object around the motorcycle 100. In the case of the presence of the collision possibility, the execution section 32 executes any of the various types of the notification operation as the supplementary assistance operation. In this way, it is possible to notify the rider of the motorcycle 100, the surrounding target object (an occupant of the surrounding traveling vehicle or the like), the hospital and/or the ambulance, or the like of the presence of the collision possibility.

In the case of the presence of the collision possibility, as the supplementary assistance operation, the execution section 32 actuates the safety device that is mounted to the motorcycle 100. For example, the safety device is the airbag. In this way, it is possible to protect the rider of the motorcycle 100 against an impact of the collision.

### Reference Signs List

- 1:: Rider-assistance system
- 11:: Drive system
- 12:: Brake system
- 13:: Display device
- 14:: Input device
- 15:: Surrounding environment sensor
- 16:: Communication device
- 17:: Positioning sensor
- 18:: Vehicle behavior sensor
- 19:: Notification device
- 20:: Steering system
- 21:: Front wheel
- 22:: Steering motor
- 30:: Controller
- 31:: Acquisition section
- 32:: Execution section
- 33:: Determination section
- 100:: Motorcycle

## Claims

1. A controller for a motorcycle (100), the controller comprising:
an execution section (32) that executes speed control operation to control a speed of the motorcycle (100) on the basis of positional relationship information, which is information on a positional relationship between the motorcycle (100) and another vehicle traveling around the motorcycle (100); and
a determination section (33) that determines presence or absence of necessity to stop the motorcycle (100) or make the motorcycle (100) become a crawl during travel of the motorcycle (100), wherein
during execution of the speed control operation, the execution section (32)
executes first automatic control operation to automatically stop the motorcycle (100) or to automatically make the motorcycle (100) become the crawl in the case where the determination section (33) determines the presence of the necessity, and
decelerates the motorcycle (100) regardless of the positional relationship between the motorcycle (100) and the another vehicle at least at one time point during execution of the first automatic control operation.

2. The controller according to claim 1, wherein
the execution section (32)
executes second automatic control operation to adjust the positional relationship between the motorcycle (100) and the another vehicle during the execution of the speed control operation, and
switches from the second automatic control operation to the first automatic control operation in the case where the determination section (33) determines the presence of the necessity during execution of the second automatic control operation.

3. The controller according to claim 2, wherein
in the case where the determination section (33) determines the presence of the necessity during the execution of the second automatic control operation, and a supplementary condition is met, the execution section (32) switches from the second automatic control operation to the first automatic control operation, and
the supplementary condition includes a condition that a travel state of the motorcycle (100) meets a criterion.

4. The controller according to claim 2, wherein
in the case where the determination section (33) determines the presence of the necessity during the execution of the second automatic control operation, and a supplementary condition is met, the execution section (32) switches from the second automatic control operation to the first automatic control operation, and
the supplementary condition includes a condition that the positional relationship information meets a criterion.

5. The controller according to claim 1, wherein
during the execution of the first automatic control operation, the execution section (32) executes supplementary assistance operation.

6. The controller according to claim 5, wherein
the supplementary assistance operation includes posture stabilization operation to stabilize a posture of the motorcycle (100) during the execution of the first automatic control operation.

7. The controller according to claim 6, wherein
the posture stabilization operation is executed in the case where the motorcycle (100) is traveling on a curve.

8. The controller according to claim 5, wherein
the determination section (33) determines presence or absence of a collision possibility that is a possibility of a collision between the motorcycle (100) and a target object around the motorcycle (100), and
in the case where the determination section (33) determines the presence of the collision possibility, the execution section (32) executes notification operation as the supplementary assistance operation.

9. The controller according to claim 8, wherein
the notification operation is
notification operation to notify a rider of the motorcycle (100) and/or
notification operation to notify a target communication object that is wirelessly communicable with the motorcycle (100).

10. The controller according to claim 5, wherein
the determination section (33) determines presence or absence of a collision possibility that is a possibility of a collision between the motorcycle (100) and a target object around the motorcycle (100), and
in the case where the determination section (33) determines the presence of the collision possibility, the execution section (32) actuates a safety device as the supplementary assistance operation.

11. The controller according to any one of claims 1 to 10, wherein
the determination section (33) determines the presence or the absence of the necessity on the basis of output of a surrounding environment sensor (15) that is mounted to the motorcycle (100).

12. The controller according to any one of claims 1 to 10, wherein
the determination section (33) determines the presence or the absence of the necessity on the basis of output of a vehicle behavior sensor (18) that is mounted to the motorcycle (100).

13. The controller according to any one of claims 1 to 10, wherein
the determination section (33) determines the presence or the absence of the necessity on the basis of output of a communication device (16) that wirelessly communicates with a surrounding vehicle and/or a road facility positioned around the motorcycle (100).

14. The controller according to any one of claims 1 to 10, wherein
the determination section (33) determines the presence or the absence of the necessity on the basis of map information.

15. A control method for a motorcycle (100), the control method comprising:
executing speed control operation by an execution section (32) of a controller (30) to control a speed of the motorcycle (100) on the basis of positional relationship information, which is information on a positional relationship between the motorcycle (100) and another vehicle traveling around the motorcycle (100); and
determining presence or absence of necessity to stop the motorcycle (100) or make the motorcycle (100) become a crawl during travel of the motorcycle (100) by a determination section (33) of the controller (30), wherein
during execution of the speed control operation, the execution section (32)
executes first automatic control operation to automatically stop the motorcycle (100) or to automatically make the motorcycle (100) become the crawl in the case where the determination section (33) determines the presence of the necessity, and
decelerates the motorcycle (100) regardless of the positional relationship between the motorcycle (100) and the another vehicle at least at one time point during execution of the first automatic control operation.
